# EUROPEAN PATENT SPECIFICATION

(11) **EP 2 638 116 B1**
(45) Date of publication and mention of the grant of the patent: **12.08.2015**
(21) Application number: 11785869.6
(22) Date of filing: 07.11.2011
(51) Int. Cl.: C09D 183/08, C09D 183/14, C09D 4/00, G02B 1/00

(54) **OPTICAL DEVICE SURFACE TREATMENT PROCESS AND SMUDGE-RESISTANT ARTICLE PRODUCED THEREBY**
OBERFLÄCHENBEHANDLUNGSVERFAHREN FÜR OPTISCHE VORRICHTUNG UND DAMIT HERGESTELLTER WISCHFESTER ARTIKEL
PROCÉDÉ DE TRAITEMENT DE SURFACE DE DISPOSITIF OPTIQUE ET ARTICLE RÉSISTANT AUX TACHES OBTENU PAR CE PROCÉDÉ

(30) Priority: 10.11.2010 US 412134 P
(43) Date of publication of application: 18.09.2013
(73) Proprietor: 3M Innovative Properties Company, Saint Paul, MN 55133-3427 (US)
(72) Inventor: IYER, Suresh S.,, Saint Paul, Minnesota 55133-3427 (US); FLYNN, Richard M.,, Saint Paul, Minnesota 55133-3427 (US); RAJAGOPAL, Rama V.j, Saint Paul, Minnesota 55133-3427 (US); OLSON, Erik D.,, Saint Paul, Minnesota 55133-3427 (US); MANSKE, Karl J.,, Saint Paul, Minnesota 55133-3427 (US); DAVID, Moses M.,, Saint Paul, Minnesota 55133-3427 (US); KELLY, Jean A.,, Saint Paul, Minnesota 55133-3427 (US)
(74) Representative: Herzog, Fiesser & Partner Patentanwälte PartG mbB
(86) International application number: PCT/US2011/059576
(87) International publication number: WO 2012/064649

(56) References cited:
- EP-A2- 1 471 120
- US-A- 5 314 731
- US-A1- 2002 192 380
- US-B1- 7 294 731
- NAKAGAWA T ET AL: "Water-repellent thin films from mixtures of fluoroalkylmethoxysilane and bis-(trialkoxysilyl)alkanes of various carbon-chain lengths using the sol-gel method and the fluoroalkylmethoxysilane dispersion mechanism", JOURNAL OF NON-CRYSTALLINE SOLIDS, NORTH-HOLLAND PHYSICS PUBLISHING. AMSTERDAM, NL, vol. 316, no. 2-3, 1 February 2003 (2003-02-01), pages 228-237, XP004402042, ISSN: 0022-3093, DOI: 10.1016/S0022-3093(02)01796-9

## Description

### Field

This invention relates to methods of treating touch screen and display substrates (i.e. substrates having a hard surface such as, for example, ceramics or glass) to impart smudge resistance (for example, oil repellency and/or finger print resistance) to a surface thereof, and, in another aspect, this invention relates to substrates treated thereby.

### Background

Various fluorochemical compositions have been used as coating compositions for application to substrates (for example, hard surface substrates and fibrous substrates) to impart low surface energy characteristics such as oil and/or water repellency (oleophobicity and/or hydrophobicity). When used in coatings or films, however, many fluorochemical materials have tended to diffuse to the surface of the coating or film and to become depleted over time (for example, due to repeated cleanings of the surface). This has led to the use of fluorochemical derivatives having reactive or functional groups (for example, perfluoropolyether thiols, silanes, phosphates, and acrylates) to enable covalent attachment to the coatings, films, or substrate surfaces.

Silane compounds having one or more fluorochemical groups have been used (alone and in combination with other materials) to prepare surface treatment compositions for substrates such as glass and ceramics. Such silane compounds have typically included one or more hydrolyzable groups and at least one polyfluorinated alkyl or polyether group.

The surface treatment of optical components such as touch panels and displays has been particularly challenging, as oily residues or smudges resulting from human finger contact with the optical component can significantly impair the visibility of displayed information and also can significantly mar the appearance of the component. Thus, such optical components have required surface treatments exhibiting superior oil repellency and, especially when made of transparent plastic, also superior scratch or abrasion resistance.

Numerous fluorochemical surface treatments have been developed and have varied in their ease of applicability to substrates (for example, due to differences in viscosity and/or in solubilities, some treatments even requiring expensive vapor deposition or multiple application steps), in their requisite curing conditions (for example, some requiring relatively high curing temperatures for relatively long periods of time), in their repellency levels, in their ease of cleaning, in their degrees of optical clarity, and/or in their durability (for example, in their chemical resistance, abrasion resistance, and/or solvent resistance). Many have also been at least somewhat substrate-specific, requiring production of multiple compositions to ensure adhesion to different substrates.

US Patent No.: 7,294,731 relates to perfluoropolyether silanes and the use thereof, in particular for coating substrates having a hard surface.

### Summary

Thus, we recognize that there exists an ongoing need for surface treatment processes (and fluorochemical compositions for use therein) that can meet the performance requirements of a variety of different optical device applications. Such processes will preferably be simple, cost-effective, compatible with existing manufacturing methods, and/or capable of imparting repellency (preferably, durable, tailored repellency) to a variety of different substrates.

Briefly, in one aspect, this invention provides a surface treatment process.
The process for easily cleanable and/or anti-smudge coatings comprises
(a) providing at least one optical device comprising at least one substrate having at least one major surface, wherein said substrate is an optical component selected from a touch screen and a display;
(b) providing a curable surface treatment composition comprising
   (1) at least one fluorinated organosilane compound comprising (i) a monovalent segment being a polyfluoropolyether and (ii) a monovalent endgroup comprising at least one silyl moiety comprising at least one group selected from hydrolyzable groups, hydroxyl, and combinations thereof (hereinafter, termed a "monopodal" fluorinated organosilane compound, due to the presence of a single endgroup (comprising one or more silyl moieties)), and
   (2) at least one fluorinated organosilane compound comprising (i) a multivalent (preferably, divalent) segment being a polyfluoropolyether and (ii) at least two monovalent endgroups, each monovalent endgroup independently comprising at least one silyl moiety comprising at least one group selected from hydrolyzable groups, hydroxyl, and combinations thereof (hereinafter, termed a "multipodal" fluorinated organosilane compound, due to the presence of multiple endgroups (each comprising one or more silyl moieties)); and
   (3) an organic solvent comprising a hydrofluoroether;
(c) applying the curable surface treatment composition to at least a portion of at least one major surface of the substrate; and
(d) curing the applied, curable surface treatment composition to form a surface treatment.
According to the invention, the monovalent segment comprises perfluoropolyether, and the multivalent segment comprises perfluoropolyether.

It has been discovered that effective optical device surface treatment compositions can be prepared by combining monopodal fluorinated organosilanes and multipodal (preferably, bipodal) fluorinated organosilanes. The resulting compositions can be cured to form crosslinked networks that exhibit low surface energy characteristics. The monopodal and multipodal components can be applied to a surface sequentially (in either order) and then cured, but, preferably, the monopodal and multipodal components can be combined to form a mixture that is then applied to a substrate surface. Surprisingly, crosslinked networks formed by application and curing of such pre-formed mixtures can exhibit synergistically enhanced low surface energy characteristics (for example, significantly higher contact angles with water), relative to crosslinked networks formed by sequential application of the components or by application of either component alone.

The properties of the crosslinked networks can be tailored to the requirements of various different optical device applications by varying the nature and relative amount of the monopodal fluorinated organosilane and the nature and relative amount of the multipodal fluorinated organosilane. In particular, the organofluorine or heteroorganofluorine content of the fluorinated organosilane compounds (especially the monopodal fluorinated organosilane) can be used to modify or tune the surface properties of the crosslinked networks for use in optical device applications where the presence of fluorine can be advantageous (for example, optical device applications requiring certain low surface energy characteristics).

Use of as little as about 0.01 weight percent of the monopodal fluorinated organosilane compound (based upon the total weight of the surface treatment composition), can provide useful low surface energy characteristics in the crosslinked networks. The crosslinked networks can exhibit, for example, advancing contact angles as high as about 130 degrees with water and as high as about 80 degrees with hexadecane. The surface treatment compositions can therefore be useful as fluorochemical surface treatments to impart a relatively high degree of hydrophobicity and/or oleophobicity to a variety of substrates (for example, for surface protection or to enhance smudge resistance and/or ease of cleaning).

The curable surface treatment compositions can be dissolved in any of a variety of solvents (including both fluorochemical and non-fluorochemical solvents) and then coated on desired substrates. The coated compositions can be cured by application of heat (for example, temperatures of about 150°C for about 30 minutes can be useful) to provide relatively highly crosslinked, relatively thin (for example, less than about 500 nanometers (nm) in thickness), relatively optically clear hardcoats. In addition to the low surface energy characteristics of the hardcoats (for example, water, oil, ink, and/or stain repellency and anti-smudge and anti-graffiti properties), the hardcoats can exhibit ultraviolet transparency, corrosion resistance, thermal stability, fire resistance, chemical resistance, wear and abrasion resistance, and/or the like.

The hardcoats can exhibit adhesion to a variety of different substrates (for example, glass, wood, metal, and ceramics). Surprisingly, relatively durable repellency characteristics can be imparted to the substrates (especially substrates having siliceous surfaces) by using relatively simple application methods (for example, dip coating or spray coating and then curing).

Thus, at least some embodiments of the process of the invention meet the above-described, ongoing need for treatment processes (and fluorochemical compositions for use therein) that can fulfill the performance requirements of a variety of different optical device surface treatment applications, while preferably being simple, cost-effective, compatible with existing manufacturing methods, and/or capable of imparting repellency (preferably, durable, tailored repellency) to a variety of different substrates. The hardcoats (with their often outstanding durability, adhesion, and repellency properties) can be widely used for optical device applications requiring durable low surface energy characteristics (for example, easily cleanable and/or anti-smudge coatings for optical components such as touch screens, displays, and the like, for use in optical devices including cellular telephones, computers, televisions, digital cameras, meters, automatic teller machines (ATMs), digital hand-held devices, digital game consoles, and the like).

In another aspect, this invention also provides a smudge-resistant article comprising at least one optical device comprising at least one substrate having at least one major surface, the substrate being an optical component selected from a touch screen and a display bearing, on at least a portion of at least one of the major surfaces, a surface treatment prepared by the above-described process of the invention.

### Detailed Description

In the following detailed description, various sets of numerical ranges (for example, of the number of carbon atoms in a particular moiety, of the amount of a particular component) are described, and, within each set, any lower limit of a range can be paired with any upper limit of a range. Such numerical ranges also are meant to include all numbers subsumed within the range (for example, 1 to 5 includes 1, 1.5, 2, 2.75, 3, 3.80, 4, 5, and so forth).

As used herein, the term "and/or" means one or all of the listed elements or a combination of any two or more of the listed elements.

The words "preferred" and "preferably" refer to embodiments of the invention that may afford certain benefits under certain circumstances. Other embodiments may also be preferred, however, under the same or other circumstances. Furthermore, the recitation of one or more preferred embodiments does not imply that other embodiments are not useful, and is not intended to exclude other embodiments from the scope of the invention.

The term "comprises" and variations thereof do not have a limiting meaning where these terms appear in the description and claims.

As used herein, "a," "an," "the," "at least one," and "one or more" are used interchangeably.

The above "Summary of the Invention" section is not intended to describe every embodiment or every implementation of the invention. The detailed description that follows more particularly describes illustrative embodiments. Throughout the detailed description, guidance is provided through lists of examples, which examples can be used in various combinations. In each instance, a recited list serves only as a representative group and should not be interpreted as being an exclusive list.

### Definitions

As used in this patent:
"carbonyl" means a divalent group of formula -(CO)-;
"carbonylimino" means a divalent group or moiety of formula -(CO)NR-, where R is hydrogen, alkyl (for example, selected from alkyl groups having from one to about four carbon atoms), or aryl;
"carbonyloxy" means a divalent group or moiety of formula -(CO)O-;
"catenated heteroatom" means an atom other than carbon (for example, oxygen, nitrogen, or sulfur) that replaces one or more carbon atoms in a carbon chain (for example, so as to form a carbon-heteroatom-carbon chain or a carbon-heteroatom-heteroatom-carbon chain);
"cure" means conversion to a crosslinked polymer network (for example, through application of heat and/or moisture);
"fluoro-" (for example, in reference to a group or moiety, such as in the case of "fluoroalkylene" or "fluoroalkyl" or "fluorocarbon") or "fluorinated" means only partially fluorinated such that there is at least one carbon-bonded hydrogen atom;
"fluorochemical" means fluorinated or perfluorinated;
"heteroorganic" means an organic group or moiety (for example, an alkyl or alkylene group) containing at least one heteroatom (preferably, at least one catenated heteroatom);
"hydrolyzable" (in reference to a group or moiety) means cleavable or removable from the atom to which it is bonded by action of liquid water having a pH of 1 to 10 under conditions of atmospheric pressure;
"hydroxysilyl" refers to a monovalent moiety or group comprising a silicon atom directly bonded to a hydroxyl group (for example, the hydroxysilyl moiety can be of formula -Si(R)₃₋ₚ(OH)ₚ where p is an integer of 1, 2, or 3 and R is a hydrolyzable or non-hydrolyzable group);
"iminocarbonylimino" means a divalent group or moiety of formula -N(R)-C(O)-N(R)-, wherein R is hydrogen, alkyl (for example, selected from alkyl groups having from one to about four carbon atoms), or aryl;
"oligomer" means a molecule that comprises at least two repeat units and that has a molecular weight less than its entanglement molecular weight; such a molecule, unlike a polymer, exhibits a significant change in properties upon the removal or addition of a single repeat unit;
"optical device" means an article comprising at least one display (for example, a cellular telephone, computer, television, digital camera, meter, automatic teller machine (ATM), digital hand-held device, or the like);
"oxy" means a divalent group or moiety of formula -O-;
"oxycarbonylimino" means a divalent group or moiety of formula -O-C(O)-N(R)-, wherein R is hydrogen, alkyl (for example, selected from alkyl groups having from one to about four carbon atoms), or aryl;
"oxycarbonyloxy" means a divalent group or moiety of formula -O(CO)O-;
"perfluoro-" (for example, in reference to a group or moiety, such as in the case of "perfluoroalkylene" or "perfluoroalkyl" or "perfluorocarbon") or "perfluorinated" means completely fluorinated such that, except as may be otherwise indicated, there are no carbon-bonded hydrogen atoms replaceable with fluorine;
"perfluoroether" means a group or moiety having two saturated or unsaturated perfluorocarbon groups (linear, branched, cyclic (preferably, alicyclic), or a combination thereof) linked with an oxygen atom (that is, there is one catenated oxygen atom);
"perfluoropolyether group (or segment or moiety)" means a group or moiety having three or more saturated or unsaturated perfluorocarbon groups (linear, branched, cyclic (preferably, alicyclic), or a combination thereof) linked with oxygen atoms (that is, there are at least two catenated oxygen atoms);
"polyfluoro" (for example, in reference to a group or moiety, such as in the case of "polyfluoroalkyl" or "polyfluoropolyether" or "polyfluorocarbon") or "polyfluorinated" means fluorinated or perfluorinated;
"sulfinyl" means a divalent group or moiety of formula -SO-;
"sulfonyl" means a divalent group or moiety of formula -SO₂-;
"sulfonylimino" means a divalent group or moiety of formula -SO₂N(R)-, wherein R is hydrogen, alkyl (for example, selected from alkyl groups having from one to about four carbon atoms), or aryl; and
"thio" means a divalent group or moiety of formula -S-.

### Fluorinated Organosilane Compounds

Fluorinated organosilane compounds that are suitable for use in the process of the invention include those monopodal fluorinated organosilane compounds that comprise (a) a monovalent segment being polyfluoropolyether and (b) a monovalent endgroup comprising at least one silyl moiety (preferably, one to about 20; more preferably, one to about 5; most preferably, one or two) comprising at least one group selected from hydrolyzable groups, hydroxyl, and combinations thereof. Suitable fluorinated organosilane compounds also include those multipodal fluorinated organosilane compounds that comprise (a) a multivalent (preferably, divalent) segment being polyfluoropolyether and (b) at least two monovalent endgroups, each monovalent endgroup independently comprising at least one silyl moiety (preferably, one to about 20; more preferably, one to about 5; most preferably, one or two) comprising at least one group selected from hydrolyzable groups, hydroxyl, and combinations thereof.

The monopodal and multipodal fluorinated organosilane compounds can be used in combination in carrying out the process of the invention, as described above. When the monovalent and/or multivalent segments of the compounds are fluorinated rather than perfluorinated, preferably not more than one atom of hydrogen is present for every two carbon atoms in the segment.

The monovalent and/or multivalent segments of the fluorinated organosilane compounds are preferably perfluorinated. According to the invention, the monovalent segment of the monopodal compounds comprises perfluoropolyether and the multivalent segment of the multipodal compounds comprises perfluoropolyether.

A class of the monopodal fluorinated organosilane compounds includes those that can be represented by the following general formula:

R*_{f}*-Q-[C(R)₂-Si(Y)₃₋ₓ(R^{1a})ₓ]_{y} I

wherein R*_{f}* is a monovalent segment and is a polyfluoropolyether; Q is a divalent or trivalent linking group (preferably, a covalent bond or an organic or heteroorganic divalent or trivalent linking group (preferably, divalent)); each R is independently hydrogen or a C₁₋₄ alkyl group (preferably, hydrogen); each Y is independently hydroxyl, a hydrolyzable group, or a combination thereof; each R^{1a} is independently a non-hydrolyzable group (preferably, C₁₋₈ alkyl, phenyl, or a combination thereof; more preferably, C₁₋₂ alkyl, phenyl, or a combination thereof; most preferably, C₁₋₂ alkyl or a combination thereof); each x is independently an integer of 0, 1, or 2 (preferably, 0); and y is an integer of 1 or 2 (preferably, 1).

A class of the multipodal fluorinated organosilane compounds includes those that can be represented by the following general formula:

R'*_{f}*[Q-[C(R)₂-Si(Y)₃₋ₓ(R^{1a})ₓ]_{y}]_{z} II

wherein R'*_{f}* is a z-valent segment and is a polyfluoropolyether; each Q is independently a divalent or trivalent linking group (preferably, a covalent bond or an organic or heteroorganic divalent or trivalent linking group (preferably, divalent)); each R is independently hydrogen or a C₁₋₄ alkyl group (preferably, hydrogen); each Y is independently hydroxyl, a hydrolyzable group, or a combination thereof; each R^{1a} is independently a non-hydrolyzable group (preferably, C₁₋₈ alkyl, phenyl, or a combination thereof; more preferably, C₁₋₂ alkyl, phenyl, or a combination thereof; most preferably, C₁₋₂ alkyl or a combination thereof); each x is independently an integer of 0, 1, or 2 (preferably, 0); each y is independently an integer of 1 or 2 (preferably, 1); and z is an integer of 2, 3, or 4 (preferably, 2).

Preferably, R*_{f}* and/or R'*_{f}* comprise at least about four perfluorinated carbon atoms (more preferably, a perfluoroalkyl (for example, C₄F₉- or C₆F₁₃- or C₈F₁₇-), perfluoroalkylene, perfluoroether, or perfluoropolyether group or a combination thereof comprising at least about four perfluorinated carbon atoms; even more preferably, a perfluoroalkyl, perfluoroalkylene, or perfluoropolyether group or a combination thereof comprising at least about four perfluorinated carbon atoms; most preferably, a perfluoropolyether group comprising at least about four perfluorinated carbon atoms). Preferably, R*_{f}* and/or R'*_{f}* (which can be saturated or unsaturated; preferably, saturated) contain from about 4 to about 35 perfluorinated carbon atoms (more preferably, from about 6 or 8 or 9 to about 25 perfluorinated carbon atoms; most preferably, from about 10 to about 17, 18, or 20 perfluorinated carbon atoms).

Preferred R*_{f}* and/or R'*_{f}* groups include perfluoropolyether groups or segments that can be linear, branched, cyclic (preferably, alicyclic), or a combination thereof. The perfluoropolyether group or segment can be saturated or unsaturated (preferably, saturated). Representative examples of useful perfluoropolyether groups include, but are not limited to, those that have perfluorinated repeating units selected from -(CₚF₂ₚ)-, -(CₚF₂ₚO)-, -(CF(Z))-, -(CF(Z)O)-, -(CF(Z)CₚF₂ₚO)-, -(CₚF₂ₚCF(Z)O)-, -(CF₂CF(Z)O)-, and combinations thereof, wherein p is an integer of 1 to about 10 (preferably, 1 to about 8; more preferably, 1 to about 6; even more preferably, 1 to about 4; most preferably, 1 to about 3); Z is selected from perfluoroalkyl, perfluoroether, perfluoropolyether, and perfluoroalkoxy groups (and combinations thereof) that are linear, branched, cyclic, or a combination thereof and that have less than or equal to about 12 carbon atoms (preferably, less than or equal to about 10 carbon atoms; more preferably, less than or equal to about 8 carbon atoms; even more preferably, less than or equal to about 6 carbon atoms; still more preferably, less than or equal to about 4 carbon atoms; most preferably, less than or equal to about 3 carbon atoms) and/or less than or equal to about 4 oxygen atoms (preferably, less than or equal to about 3 oxygen atoms; more preferably, less than or equal to about 2 oxygen atoms; most preferably, zero or one oxygen atom). In these perfluoropolyether structures, different repeating units can be combined in a block, alternating, or random arrangement to form the perfluoropolyether group.

Favorably, the polyfluoropolyether segment comprises perfluorinated repeating units selected from the group consisting of -(CₚF₂ₚO)-, -(CF(Z)O)-, -(CF(Z)CₚF₂ₚO)-, -(CₚF₂ₚCF(Z)O)-, -(CF₂CF(Z)O)-, and combinations thereof; and more favorably perfluorinated repeating units selected from the group consisting of -(CₚF₂ₚO)-, -(CF(Z)O)-, and combinations thereof. For certain of these embodiments, p is an integer from 1 to 4; or 1 to 3; or 1 or 2. For certain of these embodiments, Z is a -CF₃ group.

When the perfluoropolyether group or segment is monovalent, its terminal group can be (CₚF₂ₚ₊₁)- or (CₚF₂ₚ₊₁O)-, for example, wherein p is as defined in the above paragraphs. Representative examples of useful monovalent perfluoropolyether groups or segments include, but are not limited to, C₃F₇O(CF(CF₃)CF₂O)ₙCF(CF₃)-, C₃F₇O(CF(CF₃)CF₂O)ₙCF₂CF₂-, C₃F₇O(CF₂CF₂CF₂O)ₙCF₂CF₂-, C₃F₇O(CF₂CF₂CF₂O)ₙCF(CF₃)-, CF₃O(C₂F₄O)ₙCF₂- , CF₃O(CF₂O)ₙ(C₂F₄O)_{q}CF₂-, F(CF₂)₃O(C₃F₆O)_{q}(CF₂)₃-, and CF₃O(CF₂CF(CF₃)O)ₙ(CF₂O)X- (wherein X is CF₂-, C₂F₄-, C₃F₆-, or C₄F₈-) (wherein n has an average value of 0 to about 50, about 1 to about 50, about 3 to about 30, about 3 to about 15, or about 3 to about 10; and q has an average value of 0 to about 50, about 3 to about 30, about 3 to about 15, or about 3 to about 10).

Representative examples of useful divalent perfluoropolyether groups or segments include, but are not limited to, -CF₂O(CF₂O)ₙ(C₂F₄O)_{q}CF₂-, -CF₂O(C₂F₄O)_{q}CF₂-, -(CF₂)₃O(C₄F₈O)_{q}(CF₂)₃-, -CF(CF₃)O(CF(CF₃)CF₂O)ₙCF(CF₃)-, and -CF(CF₃)(OCF₂CF(CF₃))ₛOCₜF₂ₜO(CF(CF₃)CF₂O)_{q}CF(CF₃)-(wherein n and q are as defined above; s has an average value of 0 to about 50, about 1 to about 50, about 3 to about 30, about 3 to about 15, or about 3 to about 10; the sum of q and s (that is, q+s) has an average value of 0 to about 50 or about 4 to about 40; the sum of q and n (that is, q+n) is greater than 0; and t is an integer of about 2 to about 6 (preferably, 2 to about 4; more preferably, about 4)).

Preferably, the perfluoropolyether segment is monovalent or divalent, and/or the perfluoropolyether segment comprises at least one divalent hexafluoropropyleneoxy group (-CF(CF₃)-CF₂O-). Preferred perfluoropolyether segments include F[CF(CF₃)CF₂O]ₐCF(CF₃)- (or, as represented above, C₃F₇O(CF(CF₃)CF₂O)ₙCF(CF₃), where n + 1 = a), wherein a has an average value of about 4 to about 20, and -CF(CF₃)(OCF₂CF(CF₃))_{b}O-(CₜF₂ₜ)-O(CF(CF₃)CF₂O)_{c}CF(CF₃)-, wherein t is 2, 3, or 4 and b+c has an average value of about 4 to about 24, and -CF₂O(CF₂O)ₙ(C₂F₄O)_{q}CF₂-, and - CF₂O(C₂F₄O)_{q}CF₂-, wherein the average value of n+q or q is from about 4 to about 24 (most preferably, about 9). Such perfluoropolyether segments can be obtained through the oligomerization of hexafluoropropylene oxide and can be preferred because of their relatively benign environmental properties.

The foregoing polyfluoropolyether structures are approximate average structures that represent a distribution of oligomers and/or polymers. Thus, the subscripts designating the numbers of repeating units in the structures can be non-integral.

The organic or heteroorganic divalent or trivalent linking group, Q, can include linear, branched, or cyclic structures that can be saturated or unsaturated. The divalent or trivalent linking group, Q, optionally contains one or more heteroatoms selected from sulfur, oxygen, and nitrogen, and/or optionally contains one or more functional groups selected from ester (carbonyloxy), amido (carbonylimino), sulfonamido (sulfonylimino), carbonyl, carbonate (oxycarbonyloxy), ureylene (iminocarbonylimino), carbamate (oxycarbonylimino), thio, sulfonyl, sulfinyl, and combinations thereof (preferably, sulfonamido, amido, thio, or a combination thereof; more preferably, amido, thio, or a combination thereof; most preferably, amido). For flexural strength, Q favorably includes a segment with not less than 2 carbon atoms, the segment being directly bonded to the -C(R)₂-group. For such embodiments, generally Q includes not more than about 25 carbon atoms. Q is preferably substantially stable against hydrolysis and other chemical transformations, such as nucleophilic attack. When more than one Q group is present, the Q groups can be the same or different.

For certain embodiments, including any one of the above embodiments, Q includes organic or heteroorganic linking groups such as -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 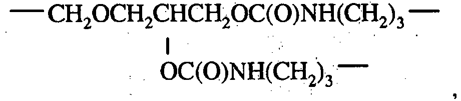 -(CH₂)ₖ-S(O)₂-(CH₂)ₖ-, -(CH₂)ₖ-S(O)-(CH₂)ₖ-, -(CH₂)ₖ-S-(CH₂)ₖ-, and combinations thereof, wherein R is hydrogen or C₁₋₄ alkyl (preferably, hydrogen), and each k is independently 2 to about 25. For certain of these embodiments, each k is independently 2 to about 15, or is independently 2 to about 10 or 12.

Favorably Q is a divalent linking group, and y is 1. In particular, Q is favorably a covalent bond or a saturated or unsaturated hydrocarbon group including 1 to about 15 carbon atoms and optionally containing 1 to 4 heteroatoms and/or 1 to 4 functional groups. For certain of these embodiments, Q is a linear hydrocarbon containing 1 to about 10 carbon atoms, optionally containing 1 to 4 heteroatoms and/or 1 to 4 functional groups. For certain of these embodiments, Q contains one functional group. For certain of these embodiments, Q is preferably -C(O)N(R)(CH₂)₂-, -OC(O)N(R)(CH₂)₂-, -CH₂O(CH₂)₂-, -CH₂-OC(O)N(R)-(CH₂)₂-, -(CH₂)₃-S-(CH₂)₃-, or a combination thereof, wherein R is hydrogen or C₁₋₄ alkyl (preferably, hydrogen).

The Y groups can be the same or different and, when hydrolyzable, can be capable of hydrolyzing, for example, in the presence of water, optionally under acidic or basic conditions, to produce groups capable of undergoing a condensation reaction (for example, hydroxysilyl groups). Desirably, each Y is independently selected from hydroxyl, hydrogen, halogen, alkoxy, acyloxy, aryloxy, polyalkyleneoxy, and combinations thereof (more desirably, each Y is independently selected from hydroxyl, alkoxy, acyloxy, aryloxy, polyalkyleneoxy, and combinations thereof; even more desirably, each Y is independently selected from hydroxyl, alkoxy, acyloxy, aryloxy, and combinations thereof; most desirably, each Y is independently alkoxy).

Favorably, alkoxy is -OR', and acyloxy is -OC(O)R', wherein each R' is independently a lower alkyl group, optionally comprising one or more halogen atoms. For certain embodiments, R' is preferably C₁₋₆ alkyl and more preferably C₁₋₄ alkyl. R' can be a linear or branched alkyl group. Favorably, aryloxy is -OR", wherein R" is aryl, optionally comprising one or more substituents independently selected from halogen atoms and C₁₋₄ alkyl optionally substituted by one or more halogen atoms. For certain embodiments, R" is preferably unsubstituted or substituted C₆₋₁₂ aryl and more preferably unsubstituted or substituted C₆₋₁₀ aryl. Favorably, polyalkyleneoxy is -O-(CHR⁴-CH₂O)_{q}-R³, wherein R³ is C₁₋₄ alkyl, R⁴ is hydrogen or methyl, with at least 70 percent of R⁴ being hydrogen, and q is 1 to 40 (preferably, 2 to 10).

Representative examples of useful monopodal and multipodal fluorinated organosilane compounds include compounds according to the above Formulas I and II, wherein any of the above-described preferred R*_{f}* and R'*_{f}* groups can be combined with any of the above-described preferred Q, Y, and R^{1a} groups, as well as any of the preferred values of subscripts x, y, and z (such preferred groups and subscripts being designated as preferred, favored, desirable, or otherwise specified with particularity in the above description).

Preferred curable surface treatment compositions for use in the process of the invention comprise one or both (preferably, both) of the following two polyfluoropolyether silanes:
(a) a polyfluoropolyether silane of Formula I above, wherein R*_{f}* is C₃F₇O(CF(CF₃)CF₂O)ₙCF(CF₃)-, and Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof (preferably, wherein each Y is independently alkoxy; more preferably, wherein each Y is independently methoxy or ethoxy) wherein n is 3 to 50 (preferably, from about 3 to about 20; more preferably, from about 4 to about 10); and
(b) a polyfluoropolyether silane of Formula II above, wherein R'*_{f}* is -CF₂O(CF₂O)ₙ(C₂F₄O)_{q}CF₂-, and Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof (preferably, wherein each Y is independently alkoxy; more preferably, wherein each Y is independently methoxy or ethoxy) wherein n is 1 to 50 and q is 3 to 40 (preferably, wherein the average value of n+q or q is from about 4 to about 24; more preferably, wherein n and q are each about 9 to about 12).

The above-described fluorinated organosilane compounds can be synthesized using standard techniques. For example, commercially available or readily synthesized polyfluoropolyether esters (or functional derivatives thereof) can be combined with a functionalized alkoxysilane, such as a 3-aminopropylalkoxysilane, and methods described in U.S. Patent Nos. 3,250,808 (Moore), 3,646,085 (Barlett), 3,810,874 (Mitsch et al.), 7,294,731 (Flynn et al.), and CA Patent No. 725747 (Moore) can be used or adapted to prepare compounds in accordance with the above description. It will be understood that functional groups other than esters can be used with equal facility to incorporate silane groups into a perfluoropolyether.

Perfluoropolyether diesters, for example, can be prepared through direct fluorination of a hydrocarbon polyether diester. Direct fluorination involves contacting the hydrocarbon polyether diester with fluorine (F₂) in a diluted form. The hydrogen atoms of the hydrocarbon polyether diester will be replaced with fluorine atoms, thereby generally resulting in the corresponding perfluoropolyether diester. Direct fluorination methods are disclosed in, for example, U.S. Patent Nos. 5,578,278 (Fall et al.) and 5,658,962 (Moore et al.).

Methods of making perfluoroalkyl silanes are also known. See, for example, U.S. Patent No. 5,274,159 (Pellerite et al.).

For certain embodiments, the weight average molecular weight of the fluorinated monovalent or multivalent segment (for example, polyfluoropolyether segment) of the fluorinated organosilane compound(s) can be about 900 or higher (more desirably, about 1000 or higher). Higher weight average molecular weights can further enhance durability. Generally, for ease of use and application, the weight average molecular weight of the fluorinated segment is desirably less than or equal to about 6000 (more desirably, less than or equal to about 4000; most desirably, less than or equal to about 3000).

Polyfluoropolyether silanes typically include a distribution of oligomers and/or polymers. Desirably for enhancing the structural integrity of the polyfluoropolyether-containing surface treatment, the amount of polyfluoropolyether silane (in such a distribution) having a polyfluoropolyether segment having a weight average molecular weight less than about 750 is not more than about 10 percent by weight (more desirably, not more than about 5 percent by weight; even more desirably, not more than about 1 percent by weight; most desirably, about 0 percent by weight), based upon the total amount of polyfluoropolyether silane in the distribution.

### Application and Curing of Curable Surface Treatment Composition

The above-described monopodal and multipodal fluorinated organosilane compounds can be combined in any of a wide range of ratios, depending upon, for example, the particular application, the nature of the substrate, and the desired surface and/or bulk properties of the resulting cured coating or surface treatment. Useful surface treatment compositions include those that comprise a weight percent ratio of the monopodal to multipodal fluorinated organosilane (monopodal fluorinated organosilane compound : multipodal fluorinated organosilane compound) equal to or greater than about 10 : 90 (in particular, equal to or greater than about 20 : 80; more particularly, equal to or greater than about 30 : 70; most particularly, equal to or greater than about 40 : 60). Useful surface treatment compositions include those that comprise a weight percent ratio of the monopodal to multipodal fluorinated organosilane (monopodal fluorinated organosilane compound : multipodal fluorinated organosilane compound) equal to or less than about 99 : 1 (in particular, equal to or less than about 97 : 3; most particularly, equal to or less than about 95 : 5).

The resulting curable surface treatment composition can have a relatively long shelf life in the absence of moisture. The fluorinated organosilane components of the composition can be in the form of relatively viscous liquids that can be used in the surface treatment process of the invention in neat form (for example, for application by chemical vapor deposition) or, preferably, in admixture with commonly-used solvents (for example, alkyl esters, ketones, alkanes, alcohols, and the like, and mixtures thereof).

According to the invention, the surface treatment composition further includes at least one organic solvent comprising a hydrofluoroether that can dissolve or suspend at least about 0.01 percent by weight of the fluorinated organosilanes (based upon the total weight of the surface treatment composition). In some embodiments, it can be desirable that the solvent or mixture of solvents have a solubility for water of at least about 0.1 percent by weight, and for certain of these embodiments, a solubility for acid of at least about 0.01 percent by weight. When solvent is used, useful concentrations of the fluorinated organosilanes can vary over a wide range (for example, from about 0.01 or 0.1 or 1 to about 90 weight percent), depending upon the viscosity of the fluorinated organosilanes, the application method utilized, the nature of the substrate, and the desired surface treatment characteristics.

Further suitable organic solvents for use in the surface treatment composition include aliphatic alcohols such as, for example, methanol, ethanol, and isopropanol; ketones such as acetone and methyl ethyl ketone; esters such as ethyl acetate and methyl formate; ethers such as diethyl ether, diisopropyl ether, methyl t-butyl ether, and dipropylene glycol monomethyl ether (DPM); hydrocarbons solvents such as alkanes, for example, heptane, decane, and other paraffinic solvents; perfluorinated hydrocarbons such as perfluorohexane and perfluorooctane; fluorinated hydrocarbons, such as pentafluorobutane; hydrofluoroethers such as methyl perfluorobutyl ether and ethyl perfluorobutyl ether; and the like; and combinations thereof. Preferred solvents include aliphatic alcohols, perfluorinated hydrocarbons, fluorinated hydrocarbons, hydrofluoroethers, and combinations thereof (more preferably, aliphatic alcohols, hydrofluoroethers, and combinations thereof; most preferably, hydrofluoroethers and combinations thereof).

Minor amounts of other optional components can be added to the surface treatment composition to impart particular desired properties for particular curing methods or conditions or particular surface treatment applications. Useful compositions can comprise conventional additives such as, for example, catalysts (including the moisture curing catalysts described below), initiators, surfactants, stabilizers, antioxidants, flame retardants, crosslinkers, ultraviolet (UV) absorbers, radical quenchers, and the like, and mixtures thereof.

A class of useful crosslinkers includes compounds that can be represented by the following general formula:

Si(Y)₄₋ₙ(R^{1a})ₙ III

wherein:
each Y is independently hydroxyl, a hydrolyzable group, or a combination thereof;
each R^{1a} is independently a non-hydrolyzable group; and
n is an integer of 0, 1, 2, or 3. Preferences for Y and R^{1a} include those set forth above for Formula I. The crosslinkers can be included in the surface treatment composition in any of a wide range of amounts (for example, from about 1 weight percent to about 40 weight percent), depending, for example, upon the particular application and the desired properties. Optionally, the crosslinkers can contain fluorine.

The fluorinated organosilane compounds (or a composition comprising, consisting, or consisting essentially thereof) can be used as fluorochemical surface treatments to impart a degree of hydrophobicity and/or oleophobicity to a variety of substrates. Substrates used in the process of the invention (and for preparing the surface-treated articles of the invention) are optical components selected from a touch screen and a display and they include those having at least one surface comprising a material that is solid and preferably substantially inert to any coating solvent that is used. Preferably, the fluorinated organosilane compounds can adhere to the substrate surface through chemical interactions, physical interactions, or a combination thereof (more preferably, a combination thereof).

Suitable substrates can comprise a single material or a combination of different materials and can be homogeneous or heterogeneous in nature. Useful heterogeneous substrates include coated substrates comprising a coating of a material (for example, a glass or a primer) borne on a physical support (for example, a polymeric film).

Further useful substrates may be those that comprise wood, glass, minerals (for example, both man-made ceramics such as concrete and naturally-occurring stones such as marble and the like), polymers (for example, polycarbonate, polyester, polyacrylate, and the like), metals (for example, copper, silver, aluminum, iron, chromium, stainless steel, nickel, and the like), metal alloys, metal compounds (for example, metal oxides and the like), leather, parchment, paper, textiles, painted surfaces, and combinations thereof. Useful substrates may be those having siliceous surfaces in either primed or unprimed form. Useful substrates may be glass, minerals, wood, metals, metal alloys, metal compounds, primed polymers, and combinations thereof (more preferably, glass, minerals, metals, metal alloys, metal compounds, primed polymers, and combinations thereof; most preferably, glass, minerals, and combinations thereof).

For best efficacy, the substrate can have a surface with groups capable of forming covalent bonds to the fluorinated organosilanes (for example, hydroxyl groups). In some embodiments, the suitability of the surface of the substrate can be improved by deposition of a primer (for example, a silica sol) or by some other physical or chemical surface modification technique. Plasma deposition techniques can be used, if desired. For example, in some embodiments, a layer comprising silicon, oxygen, and hydrogen, known in the art as diamond-like glass, can be deposited on the surface of the substrate prior to application of the surface treatment composition.

Forming a diamond-like glass layer (for example, comprising silicon, oxygen, and hydrogen) on at least a portion of the surface of the substrate by plasma deposition can be carried out in a suitable reaction chamber having a capacitively-coupled system with at least one electrode powered by an RF (radio frequency) source and at least one grounded electrode. Details concerning materials and methods for preparing diamond-like glass layers can be found, for example, in U.S. Patent No. 6,696,157 (David et al.) and 6,878,419 (David et al.).

The fluorinated organosilane compounds of the surface treatment composition can be applied separately or in combination (preferably, in combination) to at least a portion of at least one major surface of the substrate in essentially any manner (and with essentially any thickness) that can form a useful coating. Useful application methods include coating methods such as dip coating, spin coating, spray coating, wiping, roll coating, brushing, spreading, flow coating, vapor deposition, and the like, and combinations thereof.

Typically, the surface treatment composition can be coated on the substrate such that after an optional dying, a monolayer of the surface treatment composition results. Typically, such a monolayer can be from about 0.001 to about 1 micrometer thick (more typically, from about 0.001 to about 0.10 microns thick).

The substrate to be treated can be pre-cleaned, if desired, by methods known in the art to remove contaminants prior to applying the surface treatment composition. One useful pre-cleaning method is exposure to an oxygen plasma. For this pre-cleaning, pressures in the chamber can be maintained between 1.3 Pa (10 mtorr) and 27 Pa (200 mtorr). Plasma can be generated with radio frequency (RF) power levels of between 500 W and 3000 W. A solvent-washing step with an organic solvent such as acetone or ethanol or an acid etch treatment can also be included prior to the exposure to oxygen plasma, if desired.

If using vapor deposition, the conditions under which the fluorinated composition can be vaporized during chemical vapor deposition can vary according to the structures and molecular weights of the fluorinated organosilanes. For certain embodiments, the vaporizing can take place at pressures less than about 1.3 Pa (about 0.01 torr), at pressures less than about 0.013 Pa (about 10⁻⁴ torr), or even at about 0.0013 Pa to about 0.00013 Pa (about 10⁻⁵ torr to about 10⁻⁶ torr). For certain of these embodiments, the vaporizing can take place at temperatures of at least about 80°C, at least about 100°C, at least about 200°C, or at least about 300°C. Vaporizing can include imparting energy by, for example, conductive heating, convective heating, and/or microwave radiation heating.

Useful vacuum chambers and equipment are known in the art. Examples include the PLASMATHERM™ Model 3032 (available from Plasmatherm of Kresson, New Jersey) and the 900 DLS (available from Satis Vacuum of America of Grove Port, Ohio).

Applying the fluorochemical composition by vapor deposition typically includes placing it and the substrate into a chamber, decreasing the pressure in the chamber, and heating the fluorochemical composition. The fluorochemical composition typically can be held in a crucible, but in some embodiments, it can be imbibed in a porous matrix (for example, a ceramic pellet or a metallic mesh) and the pellet heated in the chamber.

Sufficient energy can be applied to the fluorochemical composition to change it to a vapor state, which vapor subsequently comes to rest in film form on the substrate, often after combining with other components. Electrostatic and/or electromagnetic fields can be used in the process of converting the composition to its vapor phase, as well as to direct coating particles toward the substrate. Useful vapor deposition methods include, for example, sputtering, reactive sputtering, evaporation, reactive evaporation, ion-assisted reactive evaporation, ion-beam assisted deposition, cathodic arc evaporation, unbalanced magnetron sputtering, high power impulse magnetron sputtering (HIPIMS), thermal and electron beam (e-beam) evaporation, and the like, and combinations thereof. Vapor deposition apparatuses known in the art (such as the apparatus disclosed in U.S. Patent No. 4,556,471 (Bergman et al.)) can be used.

After application to the substrate, the surface treatment composition (or a composition comprising, consisting, or consisting essentially of the fluorinated organosilanes) can be cured by exposure to heat and/or moisture. Moisture cure can be effected at temperatures ranging from room temperature (for example, about 23°C) up to about 80°C or more. Moisture curing times can range from a few minutes (for example, at the higher temperatures) to hours (for example, at the lower temperatures).

For the preparation of a durable coating, sufficient water typically can be present to cause hydrolysis of the hydrolyzable groups described above, so that condensation to form Si-O-Si groups can occur (and thereby curing can be achieved). The water can be, for example, present in the coating composition, adsorbed on the substrate surface, or in the ambient atmosphere. Typically, sufficient water can be present for the preparation of a durable coating if the coating method is carried out at room temperature in an atmosphere containing water (for example, an atmosphere having a relative humidity of about 30 percent to about 50 percent). Preferably, the surface treatment composition can undergo chemical reaction with the surface of the substrate (for example, with a layer comprising silicon, oxygen, and hydrogen on a substrate surface having hydroxysilyl groups) to form a durable coating through the formation of covalent bonds (including bonds in Si-O-Si groups).

Useful moisture curing catalysts are well-known in the art and include ammonia, N-heterocyclic compounds (for example, 1-methylpiperazine, 1-methylpiperidine, 4,4'-trimethylenedipiperidine, 4,4'-trimethylene-bis(1-methylpiperidine), diazobicyclo[2.2.2]octane, cis-2,6-dimethylpiperazine, and the like, and combinations thereof), mono-, di-, and trialkylamines (for example, methylamine, dimethylamine, trimethylamine, phenylamine, diphenylamine, triphenylamine, DBU (that is, 1,8-diazabicyclo[5.4.0]-7-undecene), DBN (that is, 1,5-diazabicyclo[4.3.0]-5-nonene), 1,5,9-triazacyclododecane, 1,4,7-triazacyclononane, and the like, and combinations thereof), organic or inorganic acids (for example, acetic acid, propionic acid, butyric acid, valeric acid, maleic acid, stearic acid, hydrochloric acid, nitric acid, sulfuric acid, phosphoric acid, chloric acid, hypochlorous acid, and the like, and combinations thereof), metal carboxylates, metal acetylacetonate complexes, metal powders, peroxides, metal chlorides, organometallic compounds, and the like, and combinations thereof.

Preferred moisture curing catalysts include acids (for example, acetic acid, citric acid, formic acid, triflic acid, perfluorobutyric acid, sulfuric acid, hydrochloric acid, and the like, and mixtures thereof). When used, the moisture curing catalysts can be present in amounts ranging from about 0.1 to about 10 weight percent (preferably, from about 0.1 to about 5 weight percent; more preferably, from about 0.1 to about 2 weight percent), based upon the total weight of catalyst and surface treatment composition).

A substrate to be coated can typically be contacted with the coating composition at room temperature (typically from 15°C to 30°C, and more typically from 20°C to 25°C). Alternatively, the coating composition can be applied to substrates that are preheated at a temperature of, for example, between 60°C and 150°C. Following application of the surface treatment composition, the coated substrate can be dried and the resulting coating cured at ambient temperature (for example, about 15°C to about 30°C) or elevated temperature (for example, at about 40°C to about 300°C) for a time sufficient for the curing to take place.

The curable surface treatment composition can be applied to optical devices comprising one or more of the above-described substrates and then cured to form surface treatments in the form of crosslinked hardcoats. The hardcoats can exhibit surface and/or bulk properties that can be tailored by varying the degree of crosslinking and by varying the natures and relative amounts of the monopodal and multipodal fluorinated organosilane compounds. The hardcoats (with their often outstanding durability, adhesion, and repellency properties) can be widely used for optical device applications requiring durable low surface energy characteristics (for example, easily cleanable and/or anti-smudge coatings for optical components such as touch screens, displays, and the like, for use in optical devices including cellular telephones, computers, televisions, digital cameras, meters, automatic teller machines (ATMs), digital hand-held devices, and the like).

### Examples

Objects and advantages of this invention are further illustrated by the following examples.

### Materials

All solvents were standard reagent grade obtained from commercial sources and were used without further purification unless specified otherwise.

"HFE 7200" (hydrofluoroether) was obtained from, and is commercially available from, 3M Company, St. Paul, MN, under the trade designation 3M™ Novec™ Engineered Fluid HFE-7200.

"EGC 2702" (fluorochemical polymer in hydrofluoroether solvent) was obtained from, and is commercially available from, 3M Company, St. Paul, MN, under the trade designation 3M™ Novec™ EGC-2702 Electronic Coating.

"EGC 4880" (fluoropolymer dissolved in an alkoxysilane/ethanol solvent) was obtained from, and is commercially available from, 3M Company, St. Paul, MN, under the trade designation 3M™ Novec™ EGC-4880 Electronic Coating.

3-Isocyanatopropyl trimethoxy silane ("ICPTMS") was purchased from Gelest, Inc., Morrisville, PA.

Dibutyltindilaureate was purchased from Aldrich Chemical Company, Milwaukee, WI. Aminopropyltrimethoxy silane was purchased from Aldrich Chemical Company, Milwaukee, WI.

Ethyl acetate (EtOAc) was purchased from Aldrich Chemical Company, Milwaukee, WI.

"PPFO-Disilane" (an α,ω-poly(perfluorooxyalkylene)disilane was prepared essentially as described in U.S. Patent No. 3,950,588 (McDougal et al.).

C₄F₉SO₂N(C₂H₄OH)₂ was prepared essentially as described in Example 8 of U.S. Patent No. 3,787,351 (Olson), except that an equimolar amount of C₄F₉SO₂NH₂ was substituted for C₈F₁₇SO₂NH₂.

C₄F₉SO₂NH₂ was prepared by reacting perfluorobutane sulfonyl fluoride ("PBSF") with an equimolar amount of NH₃.

"HFPO-" refers to the end group F(CF(CF₃)CF₂O)ₐCF(CF₃)- of the methyl ester F(CF(CF₃)CF₂O)ₐCF(CF₃)C(O)OCH₃, wherein a averages from 4-20, which can be prepared according to the method described in U.S. Patent No. 3,250,808 (Moore et al.), the description of which is incorporated herein by reference, with purification by fractional distillation.

"HFPO-Silane" (HFPO-CONHCH₂CH₂CH₂Si(OCH₃)₃) was prepared as follows: A 100 mL 3-necked, round bottom flask equipped with a magnetic stir bar, nitrogen (N₂) inlet, and reflux condenser was charged with HFPO-COOCH₃ (20 g, 0.01579 mole) and NH₂CH₂CH₂CH₂-Si(OCH₃)₃ (2.82 g, 0.01579 mole) under a N₂ atmosphere. The resulting reaction mixture was heated at 75°C for 12 hours. The reaction was monitored by infrared (IR) spectroscopy, and, after the disappearance of the ester peak, the resulting clear, viscous oil was kept under vacuum for another 8 hours and used as such.

"C4-Disilane" was prepared by recrystallizing C₄F₉SO₂N(C₂H₄OH)₂ and treating the recrystallized material with ICPTMS (1 molar eq) and a catalytic amount of dibutyltindilaureate and heating in EtOAc for 6 hours. The resulting reaction was monitored by IR spectroscopy. The resulting product was evaporated and used as such, after characterization by nuclear magnetic resonance (NMR) spectroscopy. The reaction is illustrated schematically below:

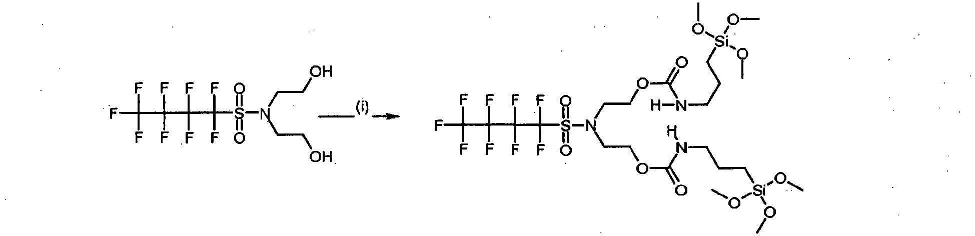

### Method for Plasma Deposition of Diamond-Like Glass (DLG) Layer

A Plasma-Therm Model 3032 batch reactor (obtained from Plasma-Therm, LLC, St. Petersburg, FL) configured for reactive ion etching (RIE) with a 1.34-meter lower powered electrode and central gas pumping was used for depositing silicon containing layers. The chamber was pumped by a roots blower (Edwards Model EH1200, obtained from Absolute Vacuum Products Limited, West Sussex, UK) backed by a dry mechanical pump (Edwards Model iQDP80, obtained from Absolute Vacuum Products Limited, West Sussex, UK). RF power was delivered by a 5 kW, 13.56 MHz solid-state generator (RFPP Model RF50S0, obtained from Advanced Energy Industries, Fort Collins, CO) through an impedance matching network. The system had a nominal base pressure of 0.666 Pa. The flow rates of the gases were controlled by MKS flow controllers (obtained from MKS Instruments, Andover, MA).

Substrates were dipped in isopropyl alcohol (IPA) and then rubbed with cotton wipes (obtained as TEXWIPE TX309 from ITW Texwipe Company, Kernerswille, NC). The resulting substrates were placed on the powered electrode of the batch plasma apparatus described above. The plasma treatment was done in a series of treatment steps. First, the substrates were treated with oxygen plasma by flowing oxygen gas at a flow rate of 500 standard cm3/min and plasma power of 500 watts for 60 seconds. After the oxygen plasma treatment, a diamond-like glass film was deposited by flowing tetramethylsilane gas at a flow rate of 150 standard cm³/min, plasma power of 500 watts for 4 seconds. After deposition of the diamond-like glass film, the substrates were exposed to oxygen plasma at a flow rate of 500 standard cm³/min, plasma power of 500 watts for 60 seconds.

### Test Methods

### Method for Measuring Contact Angles

Samples were prepared as described in the following examples. The samples were rinsed for 1 minute by hand agitation in isopropyl alcohol (IPA), which was allowed to evaporate before measuring water (H₂O) and hexadecane (HD) contact angles (using water and hexadecane, respectively, as wetting liquids). Measurements were made using as-received, reagent-grade hexadecane and deionized water filtered through a filtration system (obtained from Millipore Corporation, Billerica, MA) on a video contact angle analyzer (available as product number VCA-2500XE from AST Products, Billerica, MA). Reported values are the averages of measurements on at least three drops measured on the right and left sides of the drops. Drop volumes were 5 microliters for static contact angle measurements and 1-3 microliters for advancing and receding contact angle measurements.

### Method for Determining Ease of Cleaning Ranking: Anti-smudge Test I

In this test, the major surfaces of a cellular telephone (including the glass face and the back of the phone, obtained from Apple, Inc., Cupertino, CA under the trade designation IPHONE 3GS) were coated with the coating compositions of the examples and/or comparative examples, as described below. Then, the resulting coated surfaces of the phone were rubbed against the face of a person, and the relative amount of facial oil (smudge) transferred to the coated surfaces was visually evaluated. A score (based on visual inspection) of A, B, or C was assigned, based on the amount of facial oil transferred to the coated surfaces (a score of A meaning that a minimal amount of oil was transferred, a score of C meaning that a high amount of oil was transferred, and a score of B meaning that an intermediate amount of facial oil was transferred). In some cases, the test was repeated by substituting the glass surface of an IPAD tablet computer (obtained from Apple, Inc., Cupertino, CA) instead of the cellular phone. In other cases, the substrate was a stainless steel plate instead of the cellular phone or the tablet computer.

### Method for Determining Ease of Cleaning Ranking: Anti-smudge Test II

In this test, a cellular phone tested as described above (according to Anti-smudge Test I) was cleaned using a microfiber cloth to determine the number of wipes needed to clean the coated surfaces. A score of A was assigned to indicate that 1-2 wipes were needed to completely clean the coated surfaces, and a score of B was assigned to indicate that 5-10 wipes were needed to completely clean the coated surfaces.

### Method for Determining Ease of Cleaning Ranking: Anti-smudge Test III

In this test, the major surfaces of a cellular telephone (including the glass face and the back of the phone, obtained from Apple, Inc., Cupertino, CA under the trade designation IPHONE 3GS) were coated with the coating compositions of the examples and/or comparative examples, as described below. Then a line was drawn across the resulting coated surfaces using a SHARPIE MARKER (available from Sanford, Bellwood, IL) to test the ability of the coated surface to resist ink from a pen. A score of A was assigned to indicate that the ink beaded up and was wiped from the coated surface with 1 wipe of a clean cloth, and a score of B was assigned to indicate that more than 10 wipes were needed to completely remove the ink from the coated surface.

### Examples 1 and 3-5 and Comparative Examples 2, 6 and A-F

Coating compositions were prepared by adding together desired quantities of HFPO-Silane, PPFO-Disilane, and/or C4-Disilane (prepared as described above), and then mixing the resulting combinations at room temperature in a plastic bottle. The resulting mixtures were diluted with HFE 7200 and were rolled for 12 hours at room temperature. The components of the coating compositions and their amounts are set forth in Table 1 below for each of the examples and comparative examples.

The resulting coating compositions were clear and stayed clear for several months (no problems associated with shelf life). The coating compositions were coated on glass substrates (which had been cleaned with acetone and then dried in air). The substrates were dip coated for 2 minutes, dried at room temperature in air for approximately 5 minutes, and then were cured in an oven at 150°C for 30 minutes.

For Comparative Examples C and F, the components were not pre-mixed as described above, but rather were coated sequentially in a two-step process (for Comparative Example C, HFPO-Silane was coated first, followed by PPFO-Disilane; for Comparative Example F, PPFO-Disilane was coated first, followed by HFPO-Silane).
Additionally, the glass substrates used for Examples 5-6 and Comparative Examples D-E were first provided with a diamond-like glass ("DLG") coating (by carrying out essentially the above-described plasma deposition procedure) prior to application of the coating compositions.

The resulting cured, coated samples were then tested to determining their contact angles by using the test method described above. The results of the contact angle measurements are shown below in Table 2.

**Table 1**

| **Example No.** | **HFE 7200 (g)** | **HFPO-Silane (g)** | **PPFO-Disilane (g)** | **C4-Disilane (g)** |
|---|---|---|---|---|
| C-A | 95 | 5 | 0 | 0 |
| C-B | 95 | 0 | 5 | 0 |
| C-C | 95 | 4.5 | 0.5 | 0 |
| 1 | 95 | 4.5 | 0.5 | 0 |
| C-2 | 95 | 4.5 | 0 | 0.5 |
| 3 | 95 | 2.25 | 0.25 | |
| 4 | 95 | 0.45 | 0.05 | |
| C-D | 95 | 5 | 0 | 0 |
| C-E | 95 | 0 | 5 | 0 |
| C-F | 95 | 4.5 | 0.5 | 0 |
| 5 | 95 | 4.5 | 0.5 | 0 |
| C-6 | 95 | 4.5 | 0 | 0.5 |

**Table 2**

| **Example No.** | **Water Contact Angle** | | | **Hexadecane Contact Angle** | | |
|---|---|---|---|---|---|---|
| | **Static** | **Advancing** | **Receding** | **Static** | **Advancing** | **Receding** |
| C-A | 97 | 98 | 89 | | | |
| C-B | 78 | 78 | 79 | | | |
| C-C | 84 | 85 | 79 | | | |
| 1 | 121 | 122 | 59 | | | |
| C-2 | 115 | 125 | 80 | | | |
| 3 | 119 | 123 | 90 | | | |
| 4 | 117 | 129 | 79 | | | |
| C-D | 119 | 120 | 75 | 71 | 75 | 45 |
| C-E | 118 | 120 | 89 | 72 | 75 | 60 |
| C-F | 97 | 97.5 | 96.5 | | | |
| 5 | 120 | 120 | 105 | 75 | 75 | 67 |
| C-6 | 115 | 118 | 95 | 73 | 74 | 65 |

### Example 7 and Comparative Examples G-I

The above-described cellular phone, tablet computer, and stainless steel plate were each coated with the coating composition of Example 1 (as Example 7), EGC 2702 (as Comparative Example G), EGC 4880 (as Comparative Example H), or no coating (as Comparative Example I). The resulting substrates were then tested by carrying out the above-described Anti-smudge Tests **I-III**. The results are shown below in Table 3.

**Table 3**

| **Example No.** | **Coated Cellular Telephone** | | | **Coated Tablet Computer** | **Coated Stainless Steel** |
|---|---|---|---|---|---|
| | **Score on Test I** | **Score on Test II** | **Score on Test III** | **Score on Test I** | **Score on Test I** |
| C-G | B | B | A | B | B |
| C-H | B | B | B | B | B |
| C-I | C | B | C | C | C |
| 7 | A | A | A | A | A |

## Claims

1. A process for easily cleanable and/or anti-smudge coatings comprising
(a) providing at least one optical device comprising at least one substrate having at least one major surface, wherein said substrate is an optical component selected from a touch screen and a display;
(b) providing a curable surface treatment composition comprising
(1) at least one fluorinated organosilane compound comprising (i) a monovalent segment being a polyfluoropolyether and (ii) a monovalent endgroup comprising at least one silyl moiety comprising at least one group selected from hydrolyzable groups, hydroxyl, and combinations thereof, and
(2) at least one fluorinated organosilane compound comprising (i) a multivalent segment being a polyfluoropolyether and (ii) at least two monovalent endgroups, each said monovalent endgroup independently comprising at least one silyl moiety comprising at least one group selected from hydrolyzable groups, hydroxyl, and combinations thereof; and
(3) an organic solvent comprising a hydrofluoroether;
(c) applying said curable surface treatment composition to at least a portion of at least one major surface of said substrate; and
(d) curing said applied, curable surface treatment composition to form a surface treatment.

2. The process of Claim 1, wherein said fluorinated organosilane compound comprising a monovalent segment is represented by the following general formula:
R*_{f}*-Q-[C(R)₂-Si(Y)₃₋ₓ(R^{1a})ₓ]_{y} I
wherein R*_{f}* is a monovalent segment and is a polyfluoropolyether; Q is a divalent or trivalent linking group; each R is independently hydrogen or a C₁₋₄ alkyl group; each Y is independently hydroxyl, a hydrolyzable group, or a combination thereof; each R^{1a} is independently a non-hydrolyzable group; each x is independently an integer of 0, 1, or 2; and y is an integer of 1 or 2.

3. The process of Claim 2, wherein said R*_{f}* contains from 4 to 35 perfluorinated carbon atoms, said R*_{f}* comprises at least one divalent hexafluoropropyleneoxy group (-CF(CF₃)-CF₂O-), said Q is divalent, each said R^{1a} is independently C₁₋₈ alkyl, phenyl, or a combination thereof, each said R is hydrogen, each said x is 0, and/or said y is 1.

4. The process of Claim 2, wherein said R*_{f}* is F[CF(CF₃)CF₂O]ₐCF(CF₃)-, wherein a has an average value of 4 to 20.

5. The process of Claim 2, wherein said R*_{f}* is C₃F₇O(CF(CF₃)CF₂O)ₙCF(CF₃)-and said Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof, wherein n is 3 to 50.

6. The process of Claim 2 or any of Claims 3-5, wherein each said Q independently contains at least one heteroatom selected from sulfur, oxygen, and nitrogen, and/or contains at least one functional group selected from ester (carbonyloxy), amido (carbonylimino), sulfonamido (sulfonylimino), carbonyl, carbonate (oxycarbonyloxy), ureylene (iminocarbonylimino), carbamate (oxycarbonylimino), thio, sulfonyl, sulfinyl, and combinations thereof.

7. The process of Claim 2 or any of Claims 4-6, wherein each said Q is independently selected from -C(O)N(R)-(CH₂)ₖ-, -S(O)₂N(R)-(CH₂)ₖ-, -(CH₂)ₖ-, -CH₂O-(CH₂)ₖ-,-C(O)S-(CH₂)ₖ-, -CH₂OC(O)N(R)-(CH₂)ₖ-, 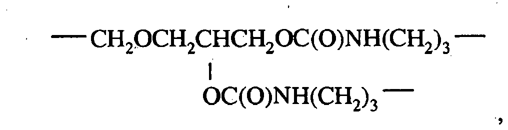 -(CH₂)ₖ-S(O)₂-(CH₂)ₖ-, -(CH₂)ₖ-S(O)-(CH₂)ₖ-, -(CH₂)ₖ-S-(CH₂)ₖ-, and combinations thereof,
wherein R is hydrogen or C₁₋₄ alkyl, and each k is independently 2 to 25.

8. The process of Claim 1 or any other of the preceding claims, wherein said fluorinated organosilane compound comprising a multivalent segment is represented by the following general formula:
R'*_{f}*[Q-[C(R)₂-Si(Y)₃₋ₓ(R^{1a})ₓ]_{y}]_{z} II
wherein R'*_{f}* is a z-valent segment and is a polyfluoropolyether; each Q is independently a divalent or trivalent linking group; each R is independently hydrogen or a C₁₋₄ alkyl group; each Y is independently hydroxyl, a hydrolyzable group, or a combination thereof; each R^{1a} is independently a non-hydrolyzable group; each x is independently an integer of 0, 1, or 2; each y is independently an integer of 1 or 2; and z is an integer of 2, 3, or 4.

9. The process of Claim 8, wherein said R'*_{f}* contains from 4 to 35 perfluorinated carbon atoms; said R'*_{f}* comprises at least one divalent hexafluoropropyleneoxy group (-CF(CF₃)-CF₂O-); each said Q is independently a divalent linking group; each said R^{1a} is independently C₁₋₈ alkyl, phenyl, or a combination thereof; each said R is hydrogen; each said x is 0; each said y is 1; and/or said z is 2.

10. The process of Claim 8, wherein said R'*_{f}* is
selected from -CF(CF₃)(OCF₂CF(CF₃))_{b}O-(CₜF₂ₜ)-O(CF(CF₃)CF₂O)_{c}CF(CF₃)-, wherein t is 2, 3, or 4 and b+c has an average value of 4 to 24; -CF₂O(CF₂O)ₙ(C₂F₄O)_{q}CF₂-, wherein the average value of n+q is from 4 to 24; and -CF₂O(C₂F₄O)_{q}CF₂-, wherein the average value of q is from 4 to 24.

11. The process of Claim 8, wherein said R'*_{f}* is
-CF₂O(CF₂O)ₙ(C₂F₄O)_{q}CF₂-, and said Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof, wherein n is 1 to 50 and q is 3 to 40.

12. The process of Claim 8 or any of Claims 9-11, wherein each said Q independently contains at least one heteroatom selected from sulfur, oxygen, and nitrogen, and/or contains at least one functional group selected from ester (carbonyloxy), amido (carbonylimino), sulfonamido (sulfonylimino), carbonyl, carbonate (oxycarbonyloxy), ureylene (iminocarbonylimino), carbamate (oxycarbonylimino), thio, sulfonyl, sulfinyl, and combinations thereof.

13. The process of Claim 8 or any of Claims 10-12, wherein each said Q is independently selected from -C(O)N(R)-(CH₂)ₖ-, -S(O)₂N(R)-(CH₂)ₖ-, -(CH2)ₖ-, -CH₂O-(CH₂)ₖ-,-C(O)S-(CH₂)ₖ-, -CH₂OC(O)N(R)-(CH₂)ₖ-, 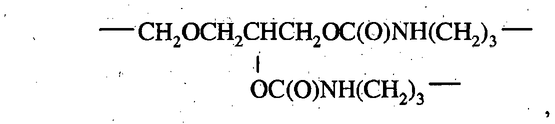 -(CH₂)ₖ-S(O)₂-(CH₂)ₖ-, -(CH₂)ₖ-S(O)-(CH₂)ₖ-, -(CH₂)ₖ-S-(CH₂)ₖ-, and combinations thereof,
wherein R is hydrogen or C₁₋₄ alkyl, and each k is independently 2 to 25.

14. The process of Claim 1, wherein the curable surface treatment composition comprises
(1) a polyfluoropolyether silane of the formula
C₃F₇O(CF(CF₃)CF₂O)ₙCF(CF₃)-C(O)NH-(CH₂)₃Si(Y)₃,
C₃F₇O(CF(CF₃)CF₂O)ₙCF(CF₃)-(CH₂)₃-S-(CH₂)₃Si(Y)₃, or a combination thereof, wherein each Y is independently hydroxyl, a hydrolyzable group, or a combination thereof and n is 3 to 50, and
(2) a polyfluoropolyether silane of the formula
(Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)₃-S-(CH₂)₃-CF₂O(CF₂O)ₙ(C₂F₄O)_{q}CF₂-(CH₂)₃-S-(CH₂)₃Si(Y)₃, or a combination thereof, wherein each Y is independently hydroxyl, a hydrolyzable group, or a combination thereof and n is 1 to 50 and q is 3 to 40; and
(3) an organic solvent comprising a hydrofluoroether.

15. An article comprising at least one optical device comprising at least one substrate having at least one major surface, said substrate being an optical component selected from a touch screen and a display bearing, on at least a portion of at least one said major surface, a surface treatment prepared by the process of Claim 1 or any other of the preceding claims.

## Patentansprüche

1. Verfahren für leicht zu reinigende und/oder schmutzabweisende Beschichtungen, umfassend:
(a) das Bereitstellen mindestens einer optischen Vorrichtung, die mindestens ein Substrat umfasst, das mindestens eine Hauptoberfläche aufweist, wobei das Substrat eine optische Komponente, ausgewählt aus einem berührungsempfindlichen Bildschirm und einer Anzeige, ist;
(b) das Bereitstellen einer härtbaren
Oberflächenbehandlungszusammensetzung, umfassend:
(1) mindestens eine fluorierte Organosilanverbindung, die (i) ein einwertiges Segment, bei dem es sich um einen Polyfluorpolyether handelt, und (ii) eine einwertige Endgruppe umfasst, die mindestens eine Silyleinheit mit mindestens eine Gruppe, ausgewählt aus hydrolysierbaren Gruppen, Hydroxyl und Kombinationen davon, umfasst und
(2) mindestens eine fluorierte Organosilanverbindung, die (i) ein mehrwertiges Segment, bei dem es sich um einen Polyfluorpolyether handelt, und (ii) mindestens zwei einwertige Endgruppen umfasst, wobei jede der einwertigen Endgruppen unabhängig mindestens eine Silyleinheit mit mindestens einer Gruppe, ausgewählt aus hydrolysierbaren Gruppen, Hydroxyl und Kombinationen davon, umfasst; und
(3) ein organisches Lösungsmittel, das einen Hydrofluorether umfasst;
(c) das Aufbringen der härtbaren
Oberflächenbehandlungszusammensetzung auf mindestens einen Teil mindestens einer Hauptoberfläche des Substrats; und
(d) das Härten der aufgetragenen härtbaren
Oberflächenbehandlungszusammensetzung, um eine Oberflächenbehandlung zu bilden.

2. Verfahren nach Anspruch 1, wobei die fluorierte Organosilanverbindung, die ein einwertiges Segment umfasst, durch die folgende allgemeine Formel dargestellt wird:
R*_{f}*-Q-[C(R)₂-Si(Y)₃₋ₓ(R^{1a})ₓ]_{y} I
worin R*_{f}* ein einwertiges Segment und ein Polyfluorpolyether ist; Q eine zweiwertige oder dreiwertige Verknüpfungsgruppe ist; R jeweils unabhängig Wasserstoff oder eine C₁₋₄-Alkylgruppe ist; Y jeweils unabhängig Hydroxyl, eine hydrolysierbare Gruppe oder eine Kombination davon ist; R^{1a} jeweils unabhängig eine nichthydrolysierbare Gruppe ist; x jeweils unabhängig eine ganze Zahl 0, 1 oder 2 ist; und y eine ganze Zahl 1 oder 2 ist.

3. Verfahren nach Anspruch 2, wobei R*_{f}* 4 bis 35 perfluorierte Kohlenstoffatome enthält und R*_{f}* mindestens eine zweiwertige Hexafluorpropylenoxygruppe (-CF(CF₃)-CF₂O-) umfasst, Q zweiwertig ist, R^{1a} jeweils unabhängig C₁₋₈-Alkyl, Phenyl oder ein Kombination davon ist, R jeweils Wasserstoff ist, x jeweils 0 ist und/oder y 1 ist.

4. Verfahren nach Anspruch 2, wobei R*_{f}*F[CF(CF₃)CF₂O]ₐCF(CF₃)- ist, wobei a einen Durchschnittswert von 4 bis 20 aufweist.

5. Verfahren nach Anspruch 2, wobei R*_{f}*C₃F₇O(CF(CF₃)CF₂O)ₙCF(CF₃)- ist und Q-C(R)₂-Si(Y)₃₋ₓ(R^{1a})ₓ C(O)NH(CH₂)₃Si(Y)₃, (CH₂)₃-S-(CH₂)₃Si(Y)₃ oder eine Kombination davon ist, wobei n 3 bis 50 ist.

6. Verfahren nach Anspruch 2 oder einem der Ansprüche 3-5, wobei Q jeweils unabhängig mindestens ein Heteroatom, ausgewählt aus Schwefel, Sauerstoff und Stickstoff, enthält und/oder mindestens eine funktionelle Gruppe, ausgewählt aus Ester(carbonyloxy), Amid(carbonylimino), Sulfonamid(sulfonylimino), Carbonyl, Carbonat(oxycarbonyloxy), Ureylen(iminocarbonylimino), Carbamat(oxycarbonylimino), Thio, Sulfonyl, Sulfinyl und Kombinationen davon, enthält.

7. Verfahren nach Anspruch 2 oder einem der Ansprüche 4-6, wobei Q jeweils unabhängig ausgewählt ist aus -C(O)N(R)-(CH₂)ₖ-, -S(O)₂N(R)-(CH₂)ₖ-, -(CH₂)ₖ-, -CH₂O-(CH₂)ₖ-, - C(O)S-(CH₂)ₖ-, -CH₂OC(O)N(R)-(CH₂)ₖ-, 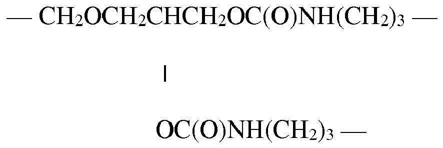 -(CH₂)ₖ-S(O)₂-(CH₂)ₖ-, -(CH₂)ₖ-S(O)-(CH₂)ₖ-, -(CH₂)ₖ-S-(CH₂)ₖ- und Kombinationen davon,
worin R Wasserstoff oder C₁₋₄-Alkyl ist und k jeweils unabhängig 2 bis 25 ist.

8. Verfahren nach Anspruch 1 oder einem der vorangehenden Ansprüche, wobei die fluorierte Organosilanverbindung, die ein mehrwertiges Segment umfasst, durch die folgende allgemeine Formel dargestellt wird:
R'*_{f}*[Q-[C(R)₂-Si(Y)₃₋ₓ(R^{1a})ₓ]_{y}]_{z} II
worin R'*_{f}* ein z-wertiges Segment ist und ein Polyfluorpolyether ist; Q jeweils unabhängig eine zweiwertige oder dreiwertige Verknüpfungsgruppe ist; R jeweils unabhängig Wasserstoff oder eine C₁₋₄-Alkylgruppe ist; Y jeweils unabhängig Hydroxyl, eine hydrolysierbare Gruppe oder eine Kombination davon ist; R^{1a} jeweils unabhängig eine nichthydrolysierbare Gruppe ist; x jeweils unabhängig eine ganze Zahl 0, 1 oder 2 ist; y jeweils unabhängig eine ganze Zahl 1 oder 2 ist; und z eine ganze Zahl 2, 3 oder 4 ist.

9. Verfahren nach Anspruch 8, wobei R'*_{f}* 4 bis 35 perfluorierte Kohlenstoffatome enthält: R'*_{f}* mindestens eine zweiwertige Hexafluorpropylenoxygruppe (-CF(CF₃)-CF₂O-) umfasst; Q jeweils unabhängig eine zweiwertige Verknüpfungsgruppe ist; R^{1a} jeweils unabhängig C₁₋₈-Alkyl, Phenyl oder eine Kombination davon ist; R jeweils Wasserstoff ist; x jeweils 0 ist; y jeweils 1 ist; und/oder z 2 ist.

10. Verfahren nach Anspruch 8, wobei R'*_{f}* ausgewählt ist aus
-CF(CF₃)(OCF₂CF(CF₃))_{b}O-(CₜF₂ₜ)-O(CF(CF₃)CF₂O)_{c}CF(CF₃)-, wobei t 2, 3 oder 4 ist und b+c einen Durchschnittswert von 4 bis 24 aufweist;
-CF₂O(CF₂O)ₙ(C₂F₄O)_{q}CF₂-,
wobei der Durchschnittswert von n+q 4 bis 24 ist; und -CF₂O(C₂F₄O)_{q}CF₂-, wobei der Durchschnittswert von q 4 bis 24 ist.

11. Verfahren nach Anspruch 8, wobei R'*_{f}* -CF₂O(CF₂O)ₙ(C₂F₄O)_{q}CF₂- ist und Q-C(R)₂-Si(Y)₃₋ₓ(R^{1a})ₓ C(O)NH(CH₂)₃Si(Y)₃, (CH₂)₃-S-(CH₂)₃Si(Y)₃ oder eine Kombination davon ist, wobei n 1 bis 50 ist und q 3 bis 40 ist.

12. Verfahren nach Anspruch 8 oder einem der Ansprüche 9-11, wobei Q jeweils unabhängig mindestens ein Heteroatom, ausgewählt aus Schwefel, Sauerstoff und Stickstoff, enthält und/oder mindestens eine funktionelle Gruppe, ausgewählt aus Ester(carbonyloxy), Amid(carbonylimino), Sulfonamid(sulfonylimino), Carbonyl, Carbonat(oxycarbonyloxy), Ureylen(iminocarbonylimino), Carbamat(oxycarbonylimino), Thio, Sulfonyl, Sulfinyl und Kombinationen davon, enthält.

13. Verfahren nach Anspruch 8 oder einem der Ansprüche 10-12, wobei Q jeweils unabhängig ausgewählt ist aus -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 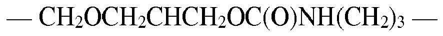 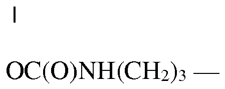 -(CH₂)ₖ-S(O)₂-(CH₂)ₖ-, -(CH₂)ₖ-S(O)-(CH₂)ₖ-, -(CH₂)ₖ-S-(CH₂)ₖ- und Kombinationen davon,
worin R Wasserstoff oder C₁₋₄-Alkyl ist und k jeweils unabhängig 2 bis 25 ist.

14. Verfahren nach Anspruch 1, wobei die härtbare Oberflächenbehandlung
(1) ein Polyfluorpolyethersilan der Formel
C₃F₇O(CF(CF₃)CF₂O)ₙCF(CF₃)-C(O)NH-(CH₂)₃Si(Y)₃, C₃F₇O(CF(CF₃)CF₂O)ₙCF(CF₃)-(CH₂)₃-S-(CH₂)₃Si(Y)₃ oder eine Kombination davon umfasst, wobei Y jeweils unabhängig Hydroxyl, eine hydrolysierbare Gruppe oder eine Kombination davon ist und n 3 bis 50 ist, und
(2) ein Polyfluorpolyethersilan der Formel
(Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)₃-S-(CH₂)₃-CF₂O(CF₂O)ₙ(C₂F₄O)qCF₂-(CH₂)₃-S-(CH₂)₃Si(Y)₃ oder eine Kombination davon umfasst, wobei Y jeweils unabhängig Hydroxyl, eine hydrolysierbare Gruppe oder eine Kombination davon ist und n 1 bis 50 ist und q 3 bis 40 ist; und
(3) ein organisches Lösungsmittel umfasst, das einen Hydrofluorether umfasst.

15. Artikel, der mindestens eine optische Vorrichtung umfasst, die mindestens ein Substrat umfasst, das mindestens eine Hauptoberfläche aufweist, wobei das Substrat eine optische Komponente, ausgewählt aus einem berührungsempfindlichen Bildschirm und einer Anzeigelagerung, ist, die auf mindestens einem Abschnitt mindestens einer Hauptoberfläche eine Oberflächenbehandlung umfasst, die anhand des Verfahrens nach Anspruch 1 oder einem anderen der vorangehenden Ansprüche hergestellt ist.

## Revendications

1. Procédé pour des revêtements facilement nettoyables et/ou anti-traces, comprenant
(a) la fourniture d'au moins un dispositif optique comprenant au moins un substrat possédant au moins une surface principale, dans lequel ledit substrat est un composant optique choisi parmi un écran tactile et un affichage ;
(b) la fourniture d'une composition de traitement de surface durcissable comprenant
(1) au moins un composé organosilane fluoré comprenant (i) un segment monovalent qui est un polyfluoropolyéther et (ii) un groupe terminal monovalent comprenant au moins un fragment silyle comprenant au moins un groupe choisi parmi les groupes hydrolysables, hydroxyle et leurs combinaisons, et
(2) au moins un composé organosilane fluoré comprenant (i) un segment multivalent qui est un polyfluoropolyéther et (ii) au moins deux groupes terminaux monovalents, chaque groupe terminal monovalent précité comprenant indépendamment au moins un fragment silyle comprenant au moins un groupe choisi parmi les groupes hydrolysables, hydroxyle et leurs combinaisons ; et
(3) un solvant organique comprenant un hydrofluoroéther ;
(c) l'application de ladite composition de traitement de surface durcissable sur au moins une partie d'au moins une surface principale dudit substrat ; et
(d) le durcissement de ladite composition de traitement de surface durcissable appliquée de façon à former un traitement de surface.

2. Procédé selon la revendication 1, dans lequel ledit composé organosilane fluoré comprenant un segment monovalent est représenté par la formule générale suivante :
R*_{f}*-Q-[C(R)₂-Si(Y)₃₋ₓ(R^{1a})_{x]y} I
dans laquelle R*_{f}* est un segment monovalent et est un polyfluoropolyéther ; Q est un groupe de liaison divalent ou trivalent ; chaque R est indépendamment l'hydrogène ou un groupe alkyle en C_{1 à 4} ; chaque Y est indépendamment un hydroxyle, un groupe hydrolysable, ou une de leurs combinaisons ; chaque R^{1a} est indépendamment un groupe non hydrolysable ; chaque x est indépendamment un nombre entier valant 0, 1 ou 2 ; et y est un nombre entier valant 1 ou 2.

3. Procédé selon la revendication 2, dans lequel ledit R*_{f}* contient de 4 à 35 atomes de carbone perfluorés, ledit R*_{f}* comprend au moins un groupe hexafluoropropylèneoxy divalent (-CF(CF₃)-CF₂O-), ledit Q est divalent, chaque R^{1a} précité est indépendamment un alkyle en C_{1 à 8}, un phényle ou une de leurs combinaisons, chaque R précité est un hydrogène, chaque x précité est 0, et/ou ledit y est 1.

4. Procédé selon la revendication 2, dans lequel ledit R*_{f}* est
F[CF(CF₃)CF₂O]ₐCF(CF₃)-, dans lequel a présente une valeur moyenne de 4 à 20.

5. Procédé selon la revendication 2, dans lequel ledit R*_{f}* est C₃F₇O(CF(CF₃)CF₂O)ₙCF(CF₃)-et ledit Q-C(R)₂-Si(Y)₃₋ₓ(R^{1a})ₓ est C(O)NH(CH₂)₃Si(Y)₃, (CH₂)₃-S-(CH₂)₃Si(Y)₃, ou une de leurs combinaisons, dans lequel n va de 3 à 50.

6. Procédé selon la revendication 2 ou l'une quelconque des revendications 3 à 5, dans lequel chaque Q précité contient indépendamment au moins un hétéroatome choisi parmi soufre, oxygène et azote, et/ou contient au moins un groupe fonctionnel choisi parmi ester (carbonyloxy), amido (carbonylimino), sulfonamido (sulfonylimino), carbonyle, carbonate (oxycarbonyloxy), uréylène (iminocarbonylimino), carbamate (oxycarbonylimino), thio, sulfonyle, sulfinyle et leurs combinaisons.

7. Procédé selon la revendication 2 ou l'une quelconque des revendications 4 à 6, dans lequel chaque Q précité est indépendamment choisi parmi -C(O)N(R)-(CH₂)ₖ-, - S(O)₂N(R)-(CH₂)ₖ-, -(CH₂)ₖ-, -CH₂O-(CH₂)ₖ-, - C(O)S-(CH₂)ₖ-, -CH₂OC(O)N(R)-(CH₂)ₖ-, 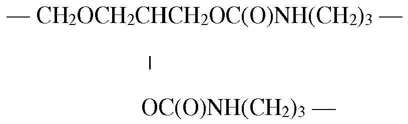 -(CH₂)ₖ-S(O)₂-(CH₂)ₖ-, -(CH₂)ₖ-S(O)-(CH₂)ₖ-, -(CH₂)ₖ-S-(CH₂)ₖ- et leurs combinaisons, dans lequel R est un hydrogène ou un alkyle en C_{1 à 4}, et chaque k va indépendamment de 2 à 25.

8. Procédé selon la revendication 1 ou l'une quelconque des revendications précédentes, dans lequel ledit composé organosilane fluoré comprenant un segment multivalent est représenté par la formule générale suivante :
R'*_{f}*[Q-[C(R)₂-Si(Y)₃₋ₓ(R^{1a})ₓ]_{y}]_{z} II
dans laquelle R'f est un segment de valence z et est un polyfluoropolyéther ; chaque Q est indépendamment un groupe de liaison divalent ou trivalent ; chaque R est indépendamment l'hydrogène ou un groupe alkyle en C₁ à ₄ ; chaque Y est indépendamment un hydroxyle, un groupe hydrolysable, ou une de leurs combinaisons ; chaque R^{1a} est indépendamment un groupe non hydrolysable ; chaque x est indépendamment un nombre entier valant 0, 1 ou 2 ; chaque y est indépendamment un nombre entier valant 1 ou 2 ; et z est un nombre entier valant 2, 3 ou 4.

9. Procédé selon la revendication 8, dans lequel ledit R'*_{f}* contient de 4 à 35 atomes de carbone perfluorés ; ledit R'*_{f}* comprend au moins un groupe hexafluoropropylèneoxy divalent (-CF(CF₃)-CF₂O-) ; chaque Q précité est indépendamment un groupe de liaison divalent ; chaque R^{1a} précité est indépendamment un alkyle en C_{1 à 8}, un phényle ou une de leurs combinaisons ; chaque R précité est un hydrogène ; chaque x précité est 0 ; chaque y précité est 1 ; et/ou ledit z est 2.

10. Procédé selon la revendication 8, dans lequel ledit R'*_{f}* est choisi parmi - CF(CF₃)(OCF₂CF(CF₃))_{b}O-(CₜF₂ₜ)-O(CF(CF₃)CF₂O)_{c}CF(CF3)-, dans lequel t est 2, 3 ou 4 et b+c a une valeur moyenne de 4 à 24 ; -CF₂O(CF₂O)ₙ(C₂F₄O)_{q}CF₂-, dans lequel la valeur moyenne de n+q va de 4 à 24 ; et -CF₂O(C₂F₄O)_{q}CF₂-, dans lequel la valeur moyenne de q va de 4 à 24.

11. Procédé selon la revendication 8, dans lequel ledit R'*_{f}* est -CF₂O(CF₂O)ₙ(C₂F₄O)_{q}CF₂-, et ledit Q-C(R)₂-Si(Y)₃₋ₓ(R^{1a})ₓ est C(O)NH(CH₂)₃Si(Y)₃, (CH₂)₃-S-(CH₂)₃Si(Y)₃, ou une de leurs combinaisons, dans lequel n va de 1 à 50 et q va de 3 à 40.

12. Procédé selon la revendication 8 ou l'une quelconque des revendications 9 à 11, dans lequel chaque Q précité contient indépendamment au moins un hétéroatome choisi parmi soufre, oxygène et azote, et/ou contient au moins un groupe fonctionnel choisi parmi ester (carbonyloxy), amido (carbonylimino), sulfonamido (sulfonylimino), carbonyle, carbonate (oxycarbonyloxy), uréylène (iminocarbonylimino), carbamate (oxycarbonylimino), thio, sulfonyle, sulfinyle et leurs combinaisons.

13. Procédé selon la revendication 8 ou l'une quelconque des revendications 10 à 12, dans lequel chaque Q précité est indépendamment choisi parmi -C(O)N(R)-(CH₂)ₖ-, -S(O)₂N(R)-(CH₂)ₖ-, -(CH₂)ₖ-, -CH₂O-(CH₂)ₖ-, - C(O)S-(CH₂)ₖ-,-CH₂OC(O)N(R)-(CH₂)ₖ-, 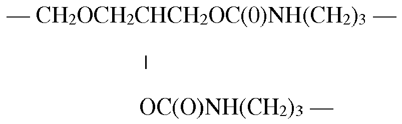 -(CH₂)ₖ-S(O)₂-(CH₂)ₖ-, -(CH₂)ₖ-S(O)-(CH₂)ₖ-, -(CH₂)ₖ-S-(CH₂)ₖ-, et leurs combinaisons,
dans lequel R est un hydrogène ou un alkyle en C_{1 à 4}, et chaque k va indépendamment de 2 à 25.

14. Procédé selon la revendication 1, dans lequel la composition de traitement de surface durcissable comprend
(1) un polyfluoropolyéther silane de formule
C₃F₇O(CF(CF₃)CF₂O)ₙCF(CF₃)-C(O)NH-(CH₂)₃Si(Y)₃, C₃F₇O(CF(CF₃)CF₂O)ₙCF(CF₃)-(CH₂)₃-S-(CH₂)₃Si(Y)₃, ou une de leurs combinaisons, dans lequel chaque Y est indépendamment un hydroxyle, un groupe hydrolysable ou une de leurs combinaisons et n va de 3 à 50, et
(2) un polyfluoropolyéther silane de formule
(Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)₃-S-(CH₂)₃-CF₂O(CF₂O)ₙ(C₂F₄O)_{q}CF₂-(CH₂)₃-S-(CH₂)₃Si(Y)₃, ou une de leurs combinaisons, dans lequel chaque Y est indépendamment un hydroxyle, un groupe hydrolysable ou une de leurs combinaisons et n va de 1 à 50 et q va de 3 à 40 ; et
(3) un solvant organique comprenant un hydrofluoroéther.

15. Article comprenant au moins un dispositif optique comprenant au moins un substrat possédant au moins une surface principale, ledit substrat étant un composant optique choisi parmi un écran tactile et un affichage portant, comprenant sur au moins une partie d'au moins une surface principale précitée, un traitement de surface préparé par le procédé selon la revendication 1 ou l'une quelconque des revendications précédentes.
